# EUROPEAN PATENT APPLICATION

(11) **EP 1 688 443 A1**
(43) Date of publication of application: **09.08.2006**
(21) Application number: 05100795.3
(22) Date of filing: 04.02.2005
(51) Int. Cl.: C08F 8/12, C08F 216/06, C08F 226/02

(54) **Vinyl alcohol-N-vinyl amine copolymer and its preparation process**

(71) Applicant: ERKOL S.A., 43006 TARRAGONA (ES)
(72) Inventor: Rodriguez Esteban, Juan Carlos, 43007, Tarragona (ES); Seco Carracedo, Alfredo, 43006, Tarragona (ES); Iragorri Sainz, Joseba Inaki, 43006, Tarragona (ES); Palau Vall, Carmen, 43006, Tarragona (ES)
(74) Representative: Barlocci, Anna

(57) **Abstract**

A process for manufacturing a highly water-soluble vinyl alcohol-N-vinyl amine copolymer with a degree of hydrolysis higher than 93%, comprising a hydrolysis reaction of a vinyl alcohol-N-vinyl formamide copolymer with an alkaline metal hydroxide in methanol characterized in that the process is carried out with more than 1.5 mol of the alkaline metal hydroxide per mol of N-vinyl formamide units and without addition of water. A higher water soluble vinyl alcohol-N-vinyl amine copolymer obtained by this process and the use thereof.

## Description

The present invention relates to copolymers containing vinyl alcohol and vinyl amine units, to a process for their manufacture, as well as to their use in several fields.

### BACKGROUND ART

Amine containing polymers are known to have several functions. The amount of amine units provides the copolymer with some characteristics which makes it useful in a great number of areas.

Because of their high electron donating ability when unprotonated and cationic charge when protonated, i.e. cationicity, amine containing copolymers show superior adhesion to many types of substrates compared to other copolymers which are typically neutral or anionic. The ability to change the reactivity and the acid-base properties of the amino groups offers numerous valuable options for viscosity control, emulsion stability control, polymer solubility modification (especially in water) or for formulating shelf-stable but reactive crosslinking or substrate reactive systems.

For many purposes, it is desirable to prepare water soluble polymers which contain relatively low levels of amine functionality, either to reduce costs by diluting the expensive amine component or for applications in which a lower level of cationic or reactive amine gives superior performance. A particularly attractive polymer for certain applications would be a vinyl alcohol copolymer with a low level of amine functionality.

Several processes for the preparation of vinyl alcohol-N-vinyl amine copolymers have been described in the art. The last step of these processes involve a conversion of the formamide groups of the corresponding vinyl alcohol-N-vinyl formamide copolymer to amino groups.

In EP 339.371 a process for preparing vinyl alcohol-N-vinyl amine copolymer by hydrolysis of vinyl alcohol-N-vinyl formamide copolymer in methanol under acidic or basic conditions is disclosed. In that document it is mentioned that when the process is carried out under basic conditions without addition of water, a conversion of about 85% is obtained, but it can be raised to 93% by addition of small amounts of water. Although a generic range from 0.7 to 3 mol of an alkaline metal hydroxide per mol of N-vinyl formamide units is cited, examples are carried out in the preferred range described, which is comprised between 1-1.5 mol.

In order to obtain a high cationic product of industrial interest, a conversion higher than 85% is required. Therefore, the assertion made in the above document leads the person skilled in the art away from the procedure of carrying out the hydrolysis of the copolymer without the addition of water, and in any case the person skilled would use the non-preferred 1.5-3 mol since even with the preferred range the results were not acceptable for industrial use.

Subsequently disclosed alternative hydrolysis processes of a vinyl alcohol-N-vinyl formamide copolymer to give a vinyl alcohol-N-vinyl amine copolymer with a conversion higher than 93% are performed either by adding water to the reaction medium (JP 2002-145953, JP 2002-161110, JP 2002-069124) or in water as a solvent (EP 1,178,056, EP 216,387). Furthermore, in JP 2002-145953, the presence of water to carry out the hydrolysis is mentioned as a requirement.

Nevertheless, the presence of water in the reaction mixture implies a loss of product during the purification and isolation processes, as a consequence of the water solubility of the final product. Additionally, a higher energy consumption of a drying process is required to dry the copolymer obtained.

### SUMMARY OF THE INVENTION

The problem to be solved by the present invention is the provision of a process for the preparation of a high cationic vinyl alcohol-N-vinyl amine copolymer at a low cost, which proceeds with a high conversion and a high yield.

The solution is based on that the present inventors have surprisingly found that carrying out a hydrolysis over a vinyl alcohol-N-vinyl amide copolymer using more than 1.5 mol of an alkaline metal hydroxide per mol of the N-vinyl formamide units, without adding water, a vinyl alcohol-N-vinyl amine copolymer with improved features can be obtained with high yield and a conversion higher than 93%. As there is no addition of water, losses of copolymer due to its water solubility are avoided. Therefore, the yield of the process is considerably increased and also implies less energy consumption during the dryness process, which makes the product more economical. Thus, the technical prejudice established in by prior art of the need to add water to the reaction medium to obtain a conversion higher than 85% is overcome.

Accordingly, in a first aspect of the present invention relates to a process for manufacturing a highly water-soluble vinyl alcohol-N-vinyl amine copolymer of formula (I), comprising a hydrolysis reaction of a vinyl alcohol-N-vinyl formamide copolymer of formula (II) with an alkaline metal hydroxide in methanol, with a conversion higher than 93%, characterized in that the process is carried out with more than 1.5 mol of the alkaline metal hydroxide per mol of N-vinyl formamide units without addition of water.

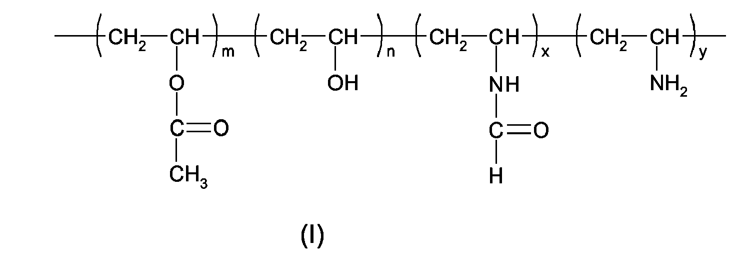

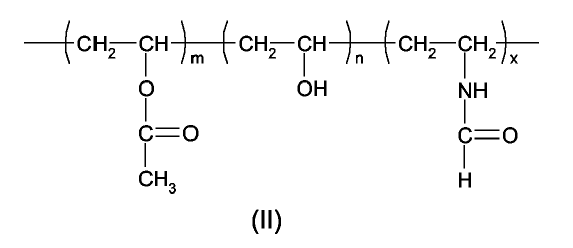

In the previous formulae m+n is 75-99 mole % and x+y is 1-25 mole %.

The vinyl alcohol-N-vinyl amine copolymer obtained by this process has a high cationicity and an enhanced water solubility in cold water compared with similar copolymers of the prior art obtained with a process carried out with addition of water. It also has a good adhesion to several substrates, specially to wood, glass and aluminum, as well as a high reactivity and an high salt and caustic stability. Thus, in a second aspect of the present invention relates to a vinyl alcohol-N-vinyl amine copolymer obtainable by the process as described herein.

The copolymer of the present invention is specially suitable for the common uses of this kind of copolymers.

In a third aspect of the present invention, the invention relates to the use of the copolymer of the invention as an additive for making paper products.

In a fourth aspect, the invention relates to the use of the copolymer of the invention as a stabilizer of protective colloid in aqueous emulsion polymerization.

In a fith aspect the invention relates to the use of the copolymer of the invention as a coagulant in waste water treatments.

In a sixth aspect the invention relates to the use of the copolymer of the invention as an additive for hair care products.

Finally, in a seventh aspect the invention relates to the use of the copolymer of the invention as a fixing agent of dyes and inks.

### DETAILED DESCRIPTION OF THE INVENTION

It is to be understood that vinyl alcohol-N-vinyl amine copolymer may contain some vinyl alcohol units as unhydrolyzed acetate ester, i.e. vinyl acetate units. In addition, the copolymer may also contain some vinyl amide units as unhydrolyzed formamide, i.e. N-vinyl formamide units, depending on the conversion.

Preferably, the vinyl alcohol-N-vinyl amine copolymer of formula (I) has an average molecular weight (Mw) ranging from about 8,000 to 200,000, more preferably 14,000 to 160,000.

In a preferred embodiment, in formula (I) m+n is 81-97 mole % and x+y is 3-19 mole %. In a more preferred embodiment, m+n is 88-94 mole % and x+y is 6-12 mole %.

Conversion of the vinyl alcohol-N-vinyl amine copolymer is higher than 93%. Preferably, higher than 95 %. More preferably, higher than 98 %.

Preferably, the conversion of the vinyl alcohol-N-vinyl formamide copolymer to the corresponding vinyl alcohol-N-vinyl amine copolymer is performed by reaction with sodium hydroxide in methanol. Acetate units that may be present in the starting vinyl alcohol-N-vinyl formamide copolymer, will be essentially hydrolyzed under the reaction conditions of the process of the present invention. The vinyl alcohol-N-vinyl formamide copolymer is suspended in methanol. The slurry may usually comprise 20-65 wt % copolymer particles in methanol. The solution of the alkaline metal hydroxide in methanol must be added to the slurry of the copolymer in an amount of more than 1.5 mol per mol of the N-vinyl formamide units of the starting copolymer. Preferably, the quantity of alkaline metal hydroxide is at least 1.7 mol per mol of the N-vinyl formamide units. More preferably the quantity of alkaline metal hydroxide is comprised between 2-3 mol per mol of the N-vinyl formamide units, although it is also suitable the use of more than 3 mol per mol of the N-vinyl formamide units.

Preferably, the reaction is carried out at a temperature comprised between 40 °C and reflux temperature. While not limiting, the hydrolysis reaction time is usually about 2 to 8 hours.

The use of a solvent in which both the vinyl alcohol-N-vinyl formamide copolymer, and the vinyl alcohol-N-vinyl amine copolymer are not soluble, allows byproducts (salt products) to be removed by filtration, followed by washing with the solvent employed to perform the reaction.

The higher solubility and different distribution of particle size of the copolymer obtained by the process of the present invention compared with similar vinyl alcohol-N-vinyl formamide copolymers with the same degree of hydrolysis obtained by a process performed in water, is a clear hint that the process of the present invention leads to a product which displays different features over the prior art known copolymers.

Starting vinyl alcohol-N-vinyl formamide copolymer can be obtained by hydrolysis of the corresponding vinyl acetate-N-vinyl formamide copolymer as disclosed in EP 339.371. The percentage of N-vinyl formamide units of the vinyl alcohol-N-vinyl formamide copolymer obtained can be determined by ¹H-NMR analysis (400MHz; 5% D₂O solution, solvent saturation method).

The copolymer of the present invention can be used as additives in the papermaking industry or coatings applied to paper or to a plastic film.

It also can be used as a coagulant in waste water treatment or as a stabilizer of protective colloid in aqueous emulsion polymerization.

The copolymer of the invention is particularly suitable as a component of hair care products, providing hair-setting compositions including hair sprays, styling gels, and styling mousses; shampoo compositions; hair conditioning compositions including hair conditioners and treating formulae for damaged hair, and the like. The hair-setting compositions comprising the water-soluble polymer of the invention have excellent and long-lasting hair-setting performance (ability to maintain hair in a desired style). They also exhibit excellent moisture retaining effects.

In addition, the copolymer of the invention can be used as a dye fixing agent, being especially effective on dye fixing of cotton fiber dyed with reactive dyes, or as an ink fixing agent for ink jet printing of paper, films, fabric, etc. It is also suitable as an assistant ink jet dyeing.

Throughout the description and claims the word "comprise" and variations of the word, such as "comprising", is not intended to exclude other technical features, additives, components, or steps. The content of the abstracts is incorporated herein as reference. Additional objects, advantages and features of the invention will become apparent to those skilled in the art upon examination of the description or may be learned by practice of the invention. The following examples are provided by way of illustration, and is not intended to be limiting of the present invention.

### EXAMPLES

The following Examples and Comparative Example illustrate the difference between the hydrolysis of vinyl alcohol-N-vinyl formamide copolymer to vinyl alcohol-N-vinyl amine copolymer with and without water addition.

### Example 1: Manufacture of vinyl alcohol-N-vinyl amine copolymer without water addition

To a 130 L pilot jacketed reactor provided with a horizontal stirrer, and a reflux condenser, 38 L of methanol and 14.2 kg of vinyl alcohol-N-vinyl formamide copolymer (10.3 mole % of N-vinyl formamide units; viscosity of a 4 wt % water solution of the copolymer measured by a Brookfield viscosimeter: 16.4 cps) were added at room temperature. The slurry was heated at 50 °C with jacket temperature control and stirring. Then, 24.8 kg of a catalyst solution (9.9 wt % sodium hydroxide in methanol, 2 mol per mol of N-vinyl formamide units) were added and the slurry was maintained at 50 °C for 7 h. Afterwards, it was cooled to room temperature and filtered. The copolymer was washed with methanol, and dried at approximately 80°C under vacuum for 4 hours. According to ¹H-NMR analysis (400MHz; 5% D₂O solution, solvent saturation method), the product showed 99% of N-vinyl formamide hydrolysis. The copolymer colour was measured at 1 wt % aqueous solution by Pt-Co scale, and showed a value of 20.

### Example 2: Manufacture of vinyl alcohol-N-vinyl amine copolymer without water addition

To a 2 L laboratory jacketed kneader, type Double sigma provided with two mixing blades of sigma design, 405.2 g of methanol and 150 g of vinyl alcohol-N-vinyl formamide copolymer (9.2 mole % of N-vinyl formamide units; viscosity of a 4 wt % water solution of the copolymer measured by a Brookfield viscosimeter: 16.6 cps) were added at room temperature. The slurry was heated at a jacket temperature control of 66 °C and stirring. Then, 194.8 g of a catalyst solution (10.4 wt % sodium hydroxide in methanol, 1.7 mol per mol of N-vinyl formamide units) were added to the kneader, while continuing the stirring. The slurry was further stirred at 66 °C for 5 h, and then was cooled to room temperature and filtered. The mother liquor was collected. The copolymer was washed with methanol and dried at approximately 63°C under vacuum for 24 hours. Afterwards, the dry obtained copolymer was ground in a Retsch SK100 mill with a 2.0 mm sieve.

### Comparative Example: Manufacture of vinyl alcohol-N-vinyl amine copolymer with water addition

The vinyl alcohol-N-vinyl amine copolymer was prepared as in Example 2 except for the addition of water. Thus, it was prepared from 150 g of vinyl alcohol-N-vinyl amine copolymer, 345.2 g methanol and 60 g of water (i.e. a 11.5 wt % of water based on methanol) instead of the 405.2 g of methanol.

### Final products comparison

According to ¹H-NMR analysis (400MHz; 5% D₂O solution, solvent saturation method), both samples showed a N-vinyl formamide hydrolysis higher than 98.5%.

The colour of the Example 2 and Comparative Example copolymers was measured at 1 wt % aqueous solution by Pt-Co scale. Both samples showed a value less or equal than 30.

### A. Copolymer solubility test at 4 wt % in water

To 96 g of water, 4 g of vinyl alcohol-N-vinyl amine copolymer were added. The sample was stirred vigorously (500 rpm) at room temperature (about 20°C) for 1 hour, and then filtered to remove the not dissolved copolymer. The obtained solution was evaporated until dryness in order to determine the copolymer concentration.

The percentage in weight of dissolved copolymer obtained for the copolymer of Example 2 and for the copolymer of Comparative Example were 78.3 wt % and 54.8 wt %, respectively. Thus, surprisingly, the copolymer of Example 2 showed a significantly better solubility in cold water than the copolymer of Comparative Example.

Additionally, the distribution particle size for the two copolymers was determined by screening the copolymer samples with a set of standard sieves and weighing the retained product in each sieve. Retsch Sieve Shaker AS 200 digit with standard 200x25mm sieves was used to perform this particle size analysis. The results are shown in the following table:

| Particle size (mm) | Ex. 2 (%) | Comp. Ex. (%) |
|---|---|---|
| ≥ 0.5 | 20.7 | 35.7 |
| < 0.5 | 79.3 | 64.3 |

### B. Determination of the losses of product during the manufacturing process

Dry residues obtained from the evaporation of mother liquors collected from both Example 2 and Comparative Example were measured by ¹H-NMR (400 MHz; 5% D₂O, solvent saturation method). The spectrum of Example 2 residue showed clearly no presence of copolymer. On the other hand, the spectrum of Comparative Example showed the presence of copolymer.

These results illustrate that water addition to perform the hydrolysis implies yield losses due to the high water solubility of the final product.

## Claims

1. A process for manufacturing a highly water-soluble vinyl alcohol-N-vinyl amine copolymer of formula (I), comprising a hydrolysis reaction of a vinyl alcohol-N-vinyl formamide copolymer of formula (II) with an alkaline metal hydroxide in methanol with conversion higher than 93%,
**characterized in that** the process is carried out with more than 1.5 mol of the alkaline metal hydroxide per mol of N-vinyl formamide units without addition of water, 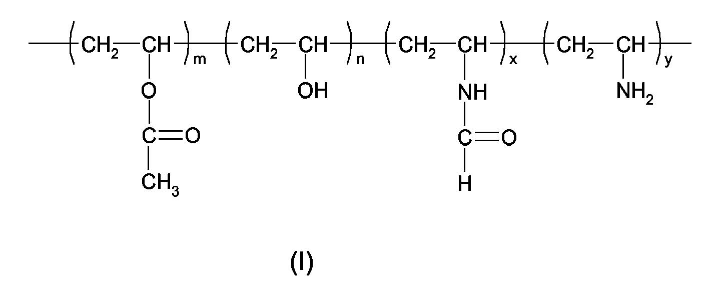 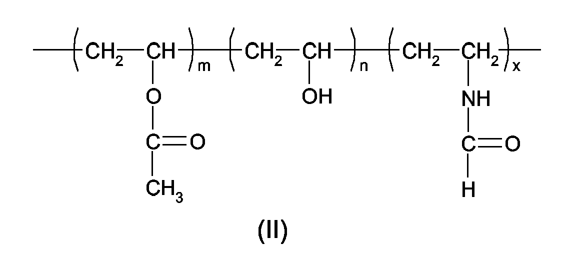 wherein m+n is 75-99 mole % and x+y is 1-25 mole %.

2. The process according to claim 1, wherein the vinyl alcohol-N-vinyl amine copolymer has an average molecular weight ranging from 8,000 to 200,000.

3. The process according to claim 2, wherein the vinyl alcohol-N-vinyl amine copolymer has an average molecular weight ranging from 14,000 to 160,000.

4. The process according to any one of the claims 1-3, wherein in formula (I) m+n is 81-97 mole % and x+y is 3-19 mole %.

5. The process according to claim 4, wherein in formula (I) m+n is 88-94 mole % and x+y is 6-12 mole %.

6. The process according to any one of the claims 1-5, wherein conversion is higher than 95 %.

7. The process according to claim 6, wherein conversion is higher than 98 %.

8. The process according any one of the claims 1-7, wherein the hydrolysis is carried out with at least 1.7 mol of an alkaline metal hydroxide per mol of N-vinyl formamide units.

9. The process according to claim 8, wherein the hydrolysis is carried out with a ratio of 2-3 mol of an alkaline metal hydroxide per mol of N-vinyl formamide units.

10. The process according to claim 8, wherein the hydrolysis is carried out with at least 3 mol of an alkaline metal hydroxide per mol of N-vinyl formamide units.

11. The process according to any one of the claims 1-10, wherein the alkaline metal hydroxide is sodium hydroxide.

12. The process according to any one of the claims 1-11, wherein the reaction is performed at a temperature comprised between 40 °C and reflux temperature.

13. A vinyl alcohol-N-vinyl amine copolymer obtainable by the process of any one the of the claims 1 to 12.

14. Use of the vinyl alcohol-N-vinyl amine copolymer of claim 13 as an additive for making paper products.

15. Use of the vinyl alcohol-N-vinyl amine copolymer of claim 13 as a stabilizer of protective colloid in aqueous emulsion polymerization.

16. Use of the vinyl alcohol-N-vinyl amine copolymer of claim 13 as a coagulant in waste water treatments.

17. Use of the vinyl alcohol-N-vinyl amine copolymer of claim 13 as an additive for hair care products.

18. Use of the vinyl alcohol-N-vinyl amine copolymer of claim 13 as a fixing agent of dyes and inks.
